# FASCICULE DE BREVET EUROPEEN

(11) **EP 1 985 834 B1**
(45) Date de publication et mention de la délivrance du brevet: **23.03.2011**
(21) Numéro de dépôt: 08154424.9
(22) Date de dépôt: 11.04.2008
(51) Int. Cl.: F02K 1/82, F16K 3/10

(54) **Vanne à clapet pour un système de refroidissement dans une turbomachine**
Klappenventil für ein Kühlungssystem in einem Strahltriebwerk
Flap valve for a cooling system in a turbojet

(30) Priorité: 27.04.2007 FR 0703047
(43) Date de publication de la demande: 29.10.2008
(73) Titulaire: SNECMA, 75015 Paris (FR)
(72) Inventeur: Blanchard, Stéphane, 77590 Chartrettes (FR); Daris, Thomas, 75012 Paris (FR)
(74) Mandataire: Ramey, Daniel

(56) Documents cités:
- EP-A- 1 106 879
- FR-A- 2 860 045
- US-A1- 2004 124 392
- US-B1- 6 328 051

## Description

La présente invention concerne en général un système de refroidissement dans une turbomachine, telle qu'un turboréacteur d'avion, en particulier des volets d'une tuyère d'éjection, et concerne plus spécifiquement une vanne à clapet faisant partie de ce système de refroidissement.

La demande FR-A-2 860 045 décrit un système de ventilation pour une tuyère d'éjection convergente divergente d'un turboréacteur et la demande US-A1-2004/124392 décrit une vanne à clapet.

La tuyère d'éjection d'une turbomachine comporte en général des volets mobiles qui sont soumis à de fortes contraintes thermiques dues au passage de gaz très chauds provenant de la chambre de combustion de la turbomachine. Ces contraintes thermiques génèrent un fort rayonnement dans l'infrarouge susceptible de nuire à la furtivité des aéronefs militaires, c'est pourquoi il est souhaitable de pouvoir limiter l'échauffement de ces volets.

Une solution consiste à prélever de l'air froid dans un flux secondaire de la turbomachine, pour le diriger vers les volets de la tuyère et les refroidir.

L'invention a notamment pour objet des moyens d'alimentation en air de refroidissement dans une turbomachine, à faible distance en amont des volets de tuyère, qui soient aptes à supporter de fortes contraintes mécaniques, générées par la poussée des gaz à cet endroit, et d'importantes déformations de la tuyère dues à de fortes contraintes thermiques.

L'invention a également pour objet des moyens d'alimentation en air de refroidissement qui soient peu encombrants et relativement légers afin d'optimiser les performances de la turbomachine.

L'invention a encore pour objet des moyens d'alimentation en air de refroidissement, qui soient commandés manuellement par le pilote de l'avion.

Elle propose à cet effet une vanne à clapet pour un système de refroidissement dans une turbomachine, comprenant un clapet monté pivotant autour d'un axe entre une position d'obturation d'un orifice de passage d'air et une position d'ouverture de l'orifice, et des moyens d'entraînement en rotation du clapet autour de l'axe, caractérisée en ce que les moyens d'entraînement en rotation comprennent deux organes tournants coaxiaux superposés et coopérant l'un avec l'autre par des surfaces de came, le premier de ces organes étant fixe en translation le long de son axe de rotation et le second de ces organes étant mobile en translation le long de cet axe et portant le clapet, les surfaces de came étant définies pour que la rotation du premier organe tournant, à partir de la position d'obturation, provoque une translation du second organe tournant et du clapet le long de l'axe de rotation, puis une rotation de cet organe et du clapet autour de cet axe, les surfaces de came des deux organes tournants étant formées aux extrémités axiales de ces organes et comprenant des rampes qui sont inclinées en hélice autour de l'axe de rotation et sont raccordées à au moins une de leurs extrémités à des faces de butée radiales par rapport à l'axe de rotation.

La vanne selon l'invention permet de convertir une commande simple en rotation, en un mouvement complexe du clapet, composé, à l'ouverture de la vanne, d'une translation destinée à éloigner le clapet de son siège, suivie d'une rotation destinée à amener le clapet en position d'ouverture, et à la fermeture, d'une rotation du clapet dans le sens contraire destinée à ramener le clapet en regard de sa position de fermeture, suivie d'une translation pour amener le clapet en appui sur son siège. La translation du clapet qui précède sa rotation à l'ouverture de la vanne permet d'éviter le frottement du clapet contre le bâti pendant sa rotation, améliorant ainsi la fiabilité et la longévité de la vanne. L'utilisation d'un effet de came axial permet de réaliser la conversion de mouvement dans un encombrement réduit.

Les rampes formées sur chacun des deux organes tournants assurent la conversion d'un mouvement de rotation du premier organe tournant, en un mouvement de translation puis de rotation du second organe tournant, tout en permettant une bonne transmission du mouvement entre ces organes.

Chaque rampe du premier organe tournant comporte au moins une face de butée radiale s'étendant parallèlement à l'axe de rotation et formée à l'une des extrémités de la rampe, cette face de butée étant destinée à venir en butée contre une face de butée correspondante du second organe de sorte que lors d'une commande de fermeture de la vanne, la rotation du premier organe entraîne de façon sûre la rotation du second organe. Chaque rampe du premier organe tournant peut également comporter une seconde face de butée radiale s'étendant parallèlement à l'axe de rotation et formée à l'autre extrémité de la rampe, cette face étant destinée à venir en butée contre une face de butée correspondante du second organe de manière à garantir l'entraînement en rotation du second organe par le premier organe lors d'une commande d'ouverture de la vanne.

Avantageusement, les deux organes tournants sont de forme cylindrique et sont centrés et guidés en rotation dans une douille cylindrique fixe.

Cette douille permet d'éviter l'usure du bâti par le frottement des organes tournants, tout en étant aisément remplaçable.

Selon une autre caractéristique de l'invention, une extrémité de la douille comporte une encoche de réception d'un doigt radial solidaire du second organe tournant, ce doigt radial étant engagé dans l'encoche dans la position de fermeture pour immobiliser en rotation le second organe tournant. Plus généralement, le doigt radial coopère avec la douille de manière à définir la trajectoire du second organe et du clapet en translation et en rotation.

Le doigt radial participe à l'effet de came axial en combinaison avec les surfaces de came des organes tournants, en empêchant la rotation du second organe tournant et en guidant ce second organe selon un mouvement de translation pure tant que le doigt n'est pas dégagé de l'encoche. Lorsque le second organe a été déplacé sur une distance axiale suffisante pour dégager complètement le doigt radial hors de l'encoche, le second organe est alors entraîné en rotation par le premier organe tournant. La trajectoire en rotation de ce second organe et du clapet qu'il porte est définie par un bord d'extrémité de la douille cylindrique contre lequel est appliqué le doigt radial.

La vanne à clapet selon l'invention présente d'autres caractéristiques avantageuses parmi lesquelles :
- dans la position de fermeture, le doigt radial du second organe est engagé dans l'encoche de la douille avec un jeu axial afin d'assurer l'appui du clapet sur son siège, et donc de garantir une bonne étanchéité à la fermeture de la vanne ;
- elle comprend des moyens élastiques de rappel sollicitant axialement le second organe tournant et le clapet vers la position de fermeture de l'orifice ;
- le clapet est un disque circulaire s'étendant dans un plan perpendiculaire à l'axe de rotation et raccordé à sa périphérie à une oreille annulaire de montage en rotation autour de l'axe ;
- les organes tournants sont tubulaires et traversés par une tige axiale, dont une extrémité porte une roue dentée d'entraînement en rotation, solidaire en rotation du premier organe tournant et dont une seconde extrémité opposée comporte un rebord annulaire d'appui axial sur l'oreille annulaire du clapet, des moyens annulaires de rappel élastique étant enfilés sur la première extrémité de la tige et serrés sur la roue dentée par un écrou vissé sur cette première extrémité de la tige ;
- la roue dentée est montée dans un boîtier fixe comportant des moyens d'immobilisation axiale de cette roue dentée ;
- le boîtier est fixé à la périphérie d'un carter comportant un collecteur annulaire d'air de refroidissement, ce collecteur comprenant un orifice d'admission d'air destiné à être ouvert et fermé par le clapet du second organe tournant.

L'invention concerne également un dispositif de refroidissement des volets commandés d'une tuyère d'éjection d'un turboréacteur, comprenant des moyens à commande manuelle de prélèvement d'air froid installés sur le carter du turboréacteur et comportant des vannes à clapet du type décrit ci-dessus, qui sont de préférence réparties de façon uniforme autour de l'axe du turboréacteur.

Ce dispositif de refroidissement comprend avantageusement un vérin de commande relié aux vannes à clapet par un moyen d'entraînement synchrone, tel par exemple qu'un câble souple ou un câble à billes, raccordé en série aux vannes à clapet.

Les vannes à clapet du type décrit ci-dessus permettent de convertir un mouvement de translation uniforme simple d'un moyen de commande des moyens d'entraînement respectifs de ces vannes en un mouvement complexe du clapet de chacune des vannes, ce qui permet de réaliser un système de refroidissement commandé par un simple et unique moyen de commande, qui peut de surcroît être avantageusement choisi souple, tel qu'un câble à billes, de sorte que ce système supporte les déformations du carter sur lequel il est monté et les éventuelles contraintes mécaniques générées par la pression des gaz environnants. Les vannes selon l'invention sont susceptibles d'être utilisées dans des conditions, notamment de température, qui interdisent l'utilisation de vannes de type électrique, comme c'est par exemple le cas au voisinage d'une tuyère d'éjection de turbomachine. Les vannes selon l'invention présentent en outre l'avantage d'être peu encombrantes, permettant ainsi de limiter l'impact aérodynamique du système de commande de refroidissement sur l'écoulement des gaz au voisinage du système. De telles vannes peuvent en outre être réparties uniformément autour du carter de manière à permettre un prélèvement d'air uniforme tout autour de ce carter. Enfin, la cinématique d'ouverture et de fermeture de ces vannes optimise leur fiabilité et leur longévité, et donc celles du système de refroidissement.

L'invention concerne également un turboréacteur équipé d'un système de refroidissement du type décrit ci-dessus.

L'invention sera mieux comprise et d'autres détails, avantages et caractéristiques de l'invention apparaîtront plus clairement à la lecture de la description suivante faite à titre d'exemple non limitatif, en référence aux dessins annexés dans lesquels :
- la figure 1 est une vue schématique partielle en perspective éclatée d'une vanne à clapet selon l'invention ;
- la figure 2 est une vue schématique partielle en perspective de cette vanne montée sur une tuyère d'éjection de turboréacteur ;
- la figure 2a est une vue à plus grande échelle d'une partie de la figure 2 ;
- la figure 3 est une vue schématique partielle en coupe axiale de la vanne à clapet montée sur la tuyère d'éjection ;
- les figures 4 et 5 sont des vues semblables à la figure 2 de la vanne pendant la phase d'ouverture ;
- la figure 6 est une vue semblable à la figure 2 de la vanne pendant sa fermeture ;
- la figure 7 est une vue schématique en coupe axiale de la vanne à clapet selon l'invention montée sur la tuyère d'éjection ;
- la figure 8 est une vue schématique partielle en perspective de la tuyère d'éjection équipée de vannes.

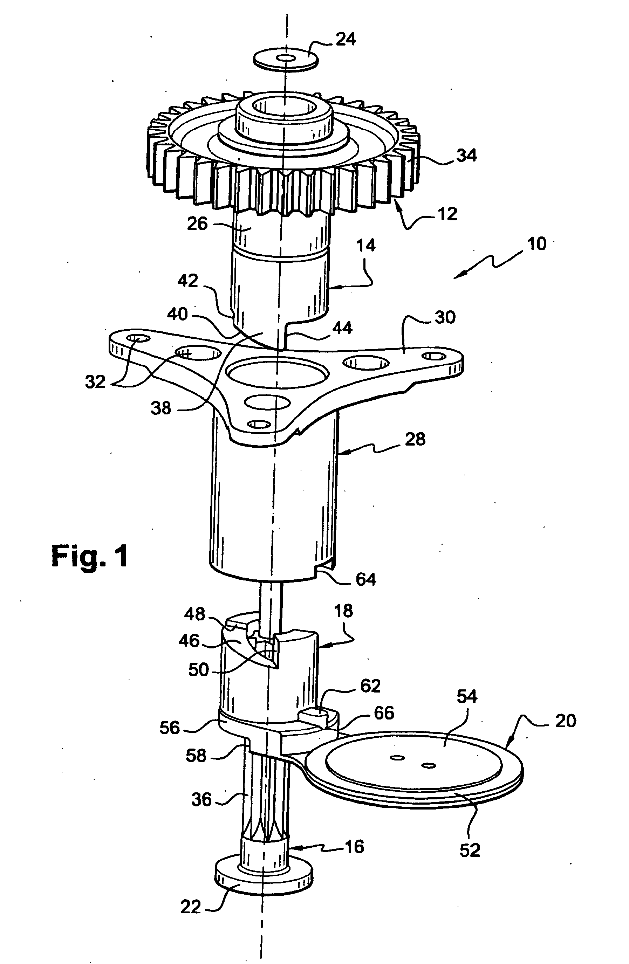

On se réfère d'abord à la figure 1 représentant une vanne 10 comprenant une roue dentée 12 d'entraînement en rotation et un premier organe tournant 14, montés rotatifs autour d'un axe de rotation 16 et destinés à entraîner en rotation et en translation un second organe tournant 18 et un clapet 20 également montés rotatifs autour de l'axe 16, entre une position d'ouverture et une position de fermeture d'un orifice de passage d'air par ce clapet 20.

L'axe de rotation est matérialisé par une tige axiale 16 qui comporte un rebord annulaire de retenue 22 à son extrémité inférieure voisine du clapet 20, et qui porte un ensemble de rondelles élastiques 24, telles que des rondelles ondulées ou tronconiques, à son autre extrémité pour solliciter élastiquement les organes tournants vers le haut. Le rebord 22 et les rondelles élastiques 24 permettent aussi de rendre le second organe tournant 18 et le clapet 20 solidaires en translation et en rotation, comme cela apparaîtra plus clairement par la suite, et d'assurer de manière générale la cohésion du dispositif dans la direction de l'axe de rotation.

Les organes tournants 14 et 18 et une jupe cylindrique 26 de la roue dentée 12 sont logés, centrés, et guidés dans une douille cylindrique 28 comportant trois bras de fixation 30 à un bâti, ces bras étant régulièrement répartis autour de la douille 28 et comprenant chacun deux orifices de fixation 32.

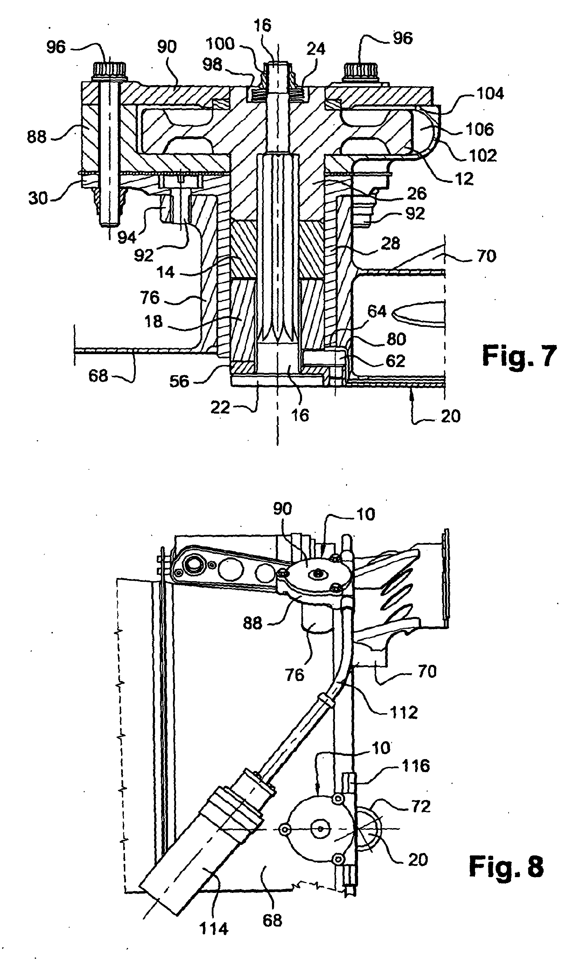

La roue dentée 12 porte des dents radiales 34 destinées à être en prise avec des moyens d'entraînement adéquats, dont un exemple sera décrit en référence à la figure 8. Cette roue dentée 12 comprend des cannelures (non visibles sur les figures) s'étendant radialement sur sa face interne et destinées à coopérer avec des cannelures 36 de forme sensiblement conjuguée formées sur la tige 16 pour transmettre à cette tige le mouvement de rotation de la roue dentée.

Le premier organe tournant est une bague cylindrique 14 comportant, sur sa face interne, des cannelures semblables à celles de la roue dentée, de sorte que cette bague 14 est entraînée en rotation par la tige 16 et est donc solidaire en rotation de la roue dentée 12. La bague 14 comporte deux dents 38, dont l'une est masquée sur les figures, qui s'étendent axialement à l'extrémité de la bague 14 en regard du deuxième organe tournant 18, et présentent une surface de came 40 en forme de rampe inclinée en hélice, à l'extrémité libre de chaque dent. Chaque dent 38 comprend deux faces 42, 44 qui sont radiales par rapport à l'axe de rotation 16 et s'étendent parallèlement à cet axe, ces deux faces 42, 44 formant deux butées d'entraînement en rotation du second organe tournant 18, une première face de butée 42 ayant une dimension axiale inférieure à celle de la seconde face de butée 44.

Le second organe tournant est une bague cylindrique 18 rendue solidaire en rotation du clapet 20 par une clavette, comme cela sera décrit plus en détail dans ce qui suit, et dont l'extrémité supérieure comprend deux parties creuses ou évidements complémentaires des dents 38 de la bague 14. Chaque partie creuse comprend une surface de came 46 en forme de rampe inclinée en hélice, s'étendant radialement d'un premier rebord de butée radial 48 jusqu'à un second rebord de butée radial 50 et possédant une étendue circonférentielle supérieure à celle des surfaces de came 40 des dents 38, de sorte que le premier rebord 48 constitue une butée d'entraînement du clapet 20 en rotation vers sa position d'ouverture tandis que le second rebord 50 constitue une butée d'entraînement du clapet 20 en rotation vers sa position de fermeture. Le premier rebord de butée radial 48 a une dimension axiale sensiblement égale à la dimension axiale de la première face de butée radiale 42 de chaque dent 38, et le second rebord de butée radial 50 a une dimension axiale sensiblement égale à la dimension axiale de la seconde face de butée radiale 44 des dents 38, de manière à optimiser le contact entre les faces de butée des dents et les rebords de butée des parties creuses.

Le clapet 20 comprend un disque externe circulaire 52 de plus grand diamètre, perpendiculaire à l'axe de rotation 16 et dont le pourtour est destiné à être appliqué contre un siège ou rebord d'un orifice à obturer, et un disque interne 54 de diamètre inférieur formé sur le disque externe 52. Le disque externe 52 est solidaire à sa périphérie d'une oreille annulaire 56 montée rotative autour de l'axe 16 et comprenant un évidement circulaire 58 destiné à recevoir le rebord de retenue 22 de la tige 16.

Un doigt radial 62 est formé à l'extrémité inférieure de la bague 18 en regard du clapet 20 et s'étend radialement vers l'extérieur. Ce doigt est destiné à être engagé, lorsque le clapet est dans sa position de fermeture, dans une encoche 64 formée dans le bord inférieur de la douille cylindrique 28 en regard du clapet 20, de manière à empêcher la rotation de la bague 18, tant que le doigt radial 62 n'est pas entièrement dégagé de l'encoche 64.

Le doigt radial 62 s'étend axialement au-delà du bord de la seconde bague 18 de sorte que sa partie inférieure soit engagée dans une rainure 66 formée dans la face supérieure de l'oreille 56, et localisée de manière à permettre un alignement de l'encoche 64 et de cette rainure 66 lorsque le clapet est dans sa position de fermeture. Le doigt radial 62 forme ainsi une clavette permettant de solidariser en rotation le second organe tournant 18 et le clapet 20 par son engagement dans la rainure 66 de l'oreille 56 du clapet.

L'engagement du doigt radial 62 dans l'encoche 64 d'une part, et dans la rainure 66 d'autre part, est assuré par les moyens de rappel élastiques 24 montés sur la tige 16 et agissant sur le clapet 20 et la bague 18 par le rebord d'extrémité 22 de la tige 16.

Dans la configuration décrite ci-dessus, la bague 14 est une pièce distincte de la roue dentée 12, bien que solidaire en rotation de cette roue dentée, ce qui est avantageux étant donné que la première bague 14 est une pièce relativement difficile à réaliser du fait de ses surfaces de came 40, et est donc susceptible de générer beaucoup plus de rebuts que la roue dentée 12 qui peut être une pièce standard. Le même type d'avantage découle du fait que l'autre bague 18 est une pièce distincte du clapet 20.

En variante, la roue dentée 12 et la bague 14 pourraient être formées d'une seule pièce, et de même, le clapet 20 et la bague 18 pourraient être formés d'une seule pièce.

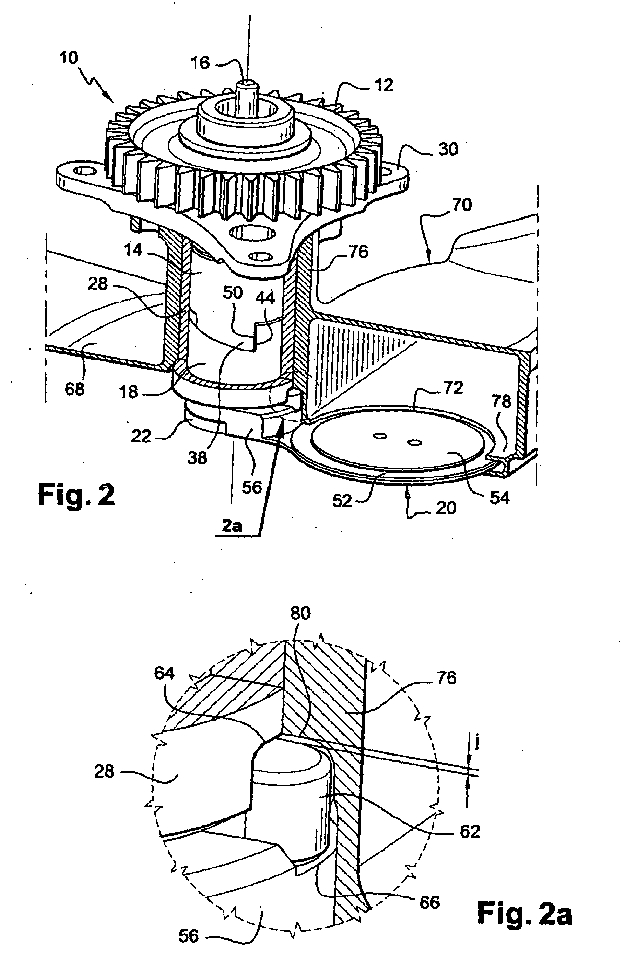

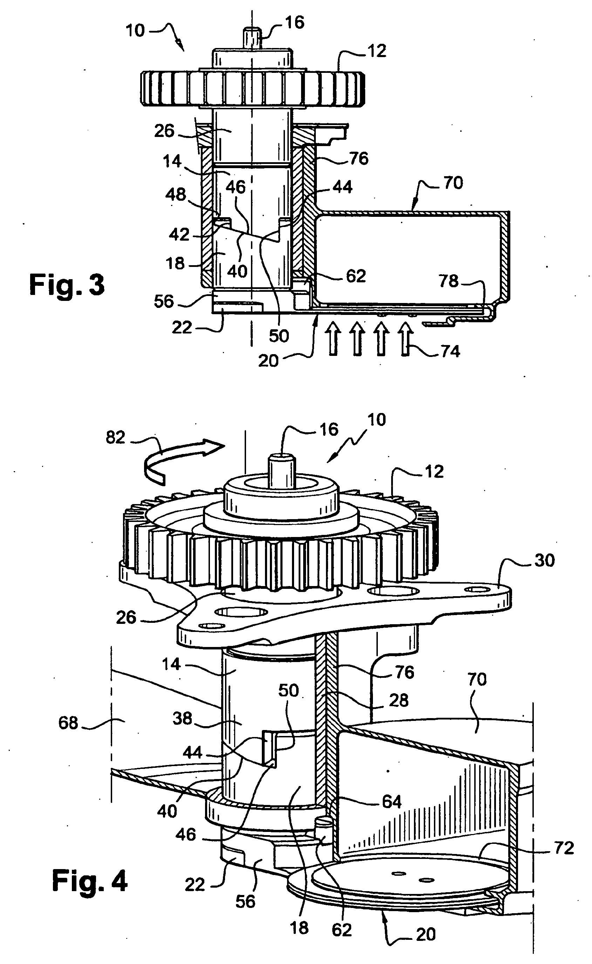

Sur les figures 2 et 3, la vanne 10 est représentée montée sur un carter 68 de turboréacteur, sur lequel est formé un collecteur annulaire 70 percé d'orifices 72 de passage d'air de refroidissement dont l'un est représenté sur les figures, cet orifice étant obturé par le clapet 20 de la vanne et empêchant l'air froid du flux secondaire, dont la poussée est symbolisée par les flèches 74, de pénétrer dans le collecteur annulaire. La douille cylindrique 28 de la vanne est logée dans une cheminée ou un support cylindrique 76 formé sur la face externe du carter. La paroi du carter 68 forme un siège annulaire 78 du clapet 20 sur le pourtour de l'orifice 72.

Dans la position de fermeture représentée sur les figures 2 et 3, les deux dents 38 de la bague 14 sont positionnées de sorte que leurs secondes faces de butée radiales 44 respectives, de plus grande dimension axiale, soient en contact avec les seconds rebords de butée radiaux 50 correspondants de la bague 18.

La figure 2a montre le doigt radial 62 qui est, d'une part, engagé dans la rainure 66 de l'oreille 56 du clapet pour solidariser en rotation le clapet 20 et la bague 18, et d'autre part, engagé avec un jeu axial *j* dans l'encoche 64 de la douille cylindrique 28, ainsi que dans une encoche 80 similaire formée dans la paroi interne du support cylindrique 76 entourant la douille cylindrique 28. Le jeu axial *j* permet d'obtenir un bon appui du clapet 20 sur son siège 78 sous l'effet de la force de rappel exercée sur la tige 16 par l'ensemble de rondelles élastiques 24, et permet donc d'optimiser l'étanchéité de la fermeture de la vanne.

La vanne selon l'invention fonctionne de la manière suivante : la vanne étant initialement dans la position de fermeture décrite précédemment, il suffit, pour provoquer son ouverture, d'entraîner la roue dentée 12 en rotation dans le sens horaire, comme représenté par la flèche 82 en figure 4, grâce à des moyens adéquats. La bague 18 étant bloquée en rotation par le doigt radial 62 qui est engagé dans l'encoche 64 de la douille cylindrique 28, la rotation de la bague 14 induit un écartement progressif de la seconde face de butée radiale 44 de chaque dent 38, par rapport au second rebord de butée radial 50 correspondant de la bague 18, ainsi qu'une poussée axiale exercée par la surface de came 40 de la bague 14 sur la surface de came 46 de la bague 18, engendrant un déplacement axial de la bague 18 et du clapet 20 qui se trouve ainsi décollé de son siège 78.

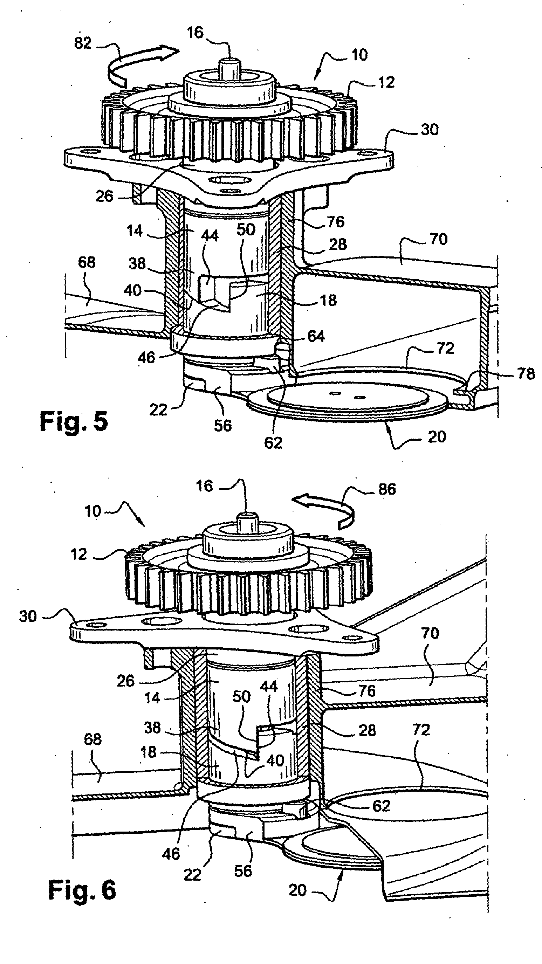

Le déplacement axial de la bague 18 entraîne progressivement le doigt radial 62 hors de l'encoche 64. Lorsque ce doigt 62 est entièrement sorti de l'encoche 64 (figure 5), plus rien ne s'oppose à la rotation de la bague 18. La première face de butée radiale 42 de chaque dent 38 vient alors en butée contre le premier rebord de butée radial 48 correspondant de la bague 18, de manière à assurer l'entraînement en rotation de cette bague par la bague 14, afin d'amener le clapet 20 dans sa position d'ouverture. Le doigt radial 62, entraîné lui aussi en rotation, est appliqué contre l'extrémité inférieure de la douille cylindrique 28, sous l'effet de la force de rappel exercée sur la tige 16 par l'ensemble de rondelles élastiques 24, et transmise à l'oreille 56 du clapet et à la seconde bague 18 par le rebord 22 de cette tige. La forme de l'extrémité inférieure de la douille 28 détermine ainsi la trajectoire du clapet 20 jusqu'à sa position d'ouverture. L'éloignement du clapet 20 de son siège 78 avant sa mise en rotation permet d'éviter le frottement du clapet 20 contre le siège 78, et donc d'éviter l'usure prématurée de ces éléments.

La fermeture de la vanne (figure 6) s'effectue par un entraînement de la roue dentée 12 en rotation dans le sens contraire, représenté par la flèche 86, de manière à ramener la seconde face de butée radiale 44 de chaque dent 38 en butée contre le second rebord de butée radial 50 correspondant de la bague 18 afin d'entraîner cette bague et le clapet 20 en rotation jusqu'à la position de fermeture, la trajectoire du clapet étant toujours déterminée par l'application du doigt radial 62 contre l'extrémité inférieure de la douille 28. Lorsque le doigt radial 62 se retrouve en regard de son encoche 64, la force de rappel, exercée sur la tige 16 par l'ensemble de rondelles élastiques 24, entraîne un déplacement axial du clapet 20 et de la bague 18, jusqu'à ce que le clapet soit en appui sur son siège 78, dans sa position de fermeture, le doigt radial 62 se retrouvant alors engagé dans l'encoche 64.

L'invention fournit donc une vanne à clapet permettant de concilier un faible encombrement avec une bonne fiabilité, grâce à l'absence de frottements entre le clapet 20 et son siège 78, et susceptible d'être commandée par un simple mouvement de translation d'un organe de commande en prise avec la roue dentée 12 de la vanne.

Les figures 7 et 8 représentent un exemple de système de refroidissement monté sur une tuyère d'éjection, et comprenant plusieurs vannes 10 selon l'invention.

Sur la figure 7, une vanne du type décrit précédemment est montée sur le carter 68 de la tuyère, et intégrée dans un carénage comprenant un support sensiblement cylindrique 76 solidaire du carter 68, un boîtier 88 et un couvercle 90 qui sont sensiblement circulaires.

La douille cylindrique 28 de la vanne est montée dans le support cylindrique 76 et fixée à ce support au moyen de vis 92 engagées respectivement dans les orifices de fixation radialement internes des bras 30 de la douille cylindrique, et dans des orifices correspondants formés dans des bras 94 du support cylindrique 76.

Le boîtier 88 repose sur les bras 30 de la douille cylindrique 28 et est coiffé par le couvercle 90 de manière à former un logement sensiblement cylindrique pour la roue dentée 12 de la vanne, interdisant tout déplacement axial de cette roue dentée 12, la fixation du boîtier 88 et du couvercle 90 étant assurée par des boulons 96 montés dans les orifices radialement externes des bras de fixation 30 de la douille cylindrique 28 et des orifices correspondants du boîtier 88 et du couvercle 90.

Le couvercle 90 comporte un orifice circulaire sensiblement central dans lequel est guidée une extrémité supérieure de la jupe 26 de la roue dentée 12. Cette extrémité de la jupe 26 comprend un évidement cylindrique 98 formé autour de l'axe de rotation 16 et dans lequel sont disposées les rondelles élastiques 24 montées autour de la tige 16 ainsi qu'un écrou 100 vissé sur la tige 16 et serrant les rondelles élastiques sur la roue dentée 12.

Le boîtier 88 comporte une partie rectiligne 102 à rebord cylindrique 104 de manière à former une lumière rectiligne 106 semi cylindrique de passage d'un organe d'entraînement de la roue dentée 12.

La figure 8 montre le carter 68 de la tuyère muni d'un collecteur annulaire 70 formé sur sa surface externe, ce collecteur comprenant des orifices 72 d'entrée d'air de refroidissement régulièrement répartis sur la circonférence du collecteur, et des moyens de distribution de cet air de refroidissement vers les volets chauds de la tuyère.

Chaque orifice d'entrée d'air 72 du collecteur est commandé par une vanne 10 selon l'invention, destinée à en contrôler l'ouverture et la fermeture.

Les vannes 10 sont commandées par un câble souple ou par un câble à billes 112 engagé dans la lumière semi cylindrique 106 de chaque vanne 10 de manière à entraîner la roue dentée 12, le câble 112 étant actionné par un vérin 114 monté sur la tuyère et relié à une extrémité du câble, l'autre extrémité 116 de ce câble étant libre en sortie de la dernière vanne 10 commandée par ce câble 112.

Ce système permet de commander l'ensemble des vannes 10 réparties autour de la tuyère de manière synchronisée au moyen d'un seul vérin de commande 114, pour le refroidissement des volets commandés de la tuyère d'éjection du turboréacteur, ce système étant à commande manuelle par le pilote de l'avion.

L'utilisation d'un câble souple 112 pour transmettre le mouvement de commande du vérin 114 aux roues dentées 12 des vannes permet au système de supporter les déformations du carter 68 sur lequel il est monté tout en résistant aux contraintes mécaniques et thermiques générées par l'écoulement des gaz aux alentours de ce système.

En outre, un tel câble 112 ne requiert pas d'être en circuit fermé, son extrémité 116 opposée au vérin de commande pouvant rester libre comme cela a déjà été mentionné, ce qui permet un gain de poids avantageux.

## Revendications

1. Vanne à clapet (10) pour un système de refroidissement dans une turbomachine, comprenant un clapet (20) monté pivotant autour d'un axe (16) entre une position d'obturation d'un orifice (72) de passage d'air et une position d'ouverture de l'orifice (72), et des moyens d'entraînement en rotation du clapet (20) autour de l'axe (16), les moyens d'entraînement en rotation comprenant deux organes tournants coaxiaux (14, 18) superposés et coopérant l'un avec l'autre par des surfaces de came (40, 46), le premier de ces organes (14) étant fixe en translation le long de son axe de rotation et le second de ces organes (18) étant mobile en translation le long de cet axe et portant le clapet (20), les surfaces de came (40, 46) étant définies pour que la rotation du premier organe tournant (14), à partir de la position d'obturation, provoque une translation du second organe tournant (18) et du clapet (20) le long de l'axe de rotation (16), puis une rotation de cet organe (18) et du clapet (20) autour de cet axe, les surfaces de came (40, 46) des deux organes tournants (14, 18) étant formées aux extrémités axiales de ces organes et comprenant des rampes qui sont inclinées en hélice autour de l'axe de rotation (16), **caractérisée en ce que** les rampes sont raccordées à au moins une de leurs extrémités à des faces de butée (42, 44, 48, 50) radiales par rapport à l'axe de rotation (16).

2. Vanne à clapet (10) selon la revendication 1, **caractérisée en ce que** les deux organes tournants (14, 18) sont de forme cylindrique et sont centrés et guidés en rotation dans une douille cylindrique fixe (28).

3. Vanne à clapet (10) selon la revendication 2, **caractérisée en ce qu'**une extrémité de la douille (28) comporte une encoche (64) de réception d'un doigt radial (62) solidaire du second organe tournant (18), ce doigt radial (62) étant engagé dans l'encoche (64) dans la position de fermeture pour immobiliser en rotation le second organe tournant (18).

4. Vanne à clapet (10) selon la revendication 3, **caractérisée en ce que** les flancs de l'encoche (64) de la douille coopèrent avec le doigt radial (62) pour guider le second organe tournant (18) dans son mouvement de translation.

5. Vanne à clapet (10) selon la revendication 3 ou 4, **caractérisée en ce que** l'extrémité inférieure de la douille (28) coopère avec le doigt radial (62) pour guider le second organe tournant (18) dans son mouvement de rotation.

6. Vanne à clapet selon l'une des revendications 3 à 5, **caractérisée en ce que**, dans la position de fermeture, le doigt radial (62) du second organe tournant (18) est engagé dans l'encoche (64) de la douille (28) avec un jeu axial.

7. Vanne à clapet selon l'une des revendications 3 à 6, **caractérisée en ce qu'**elle comprend des moyens élastiques de rappel (24) sollicitant axialement le second organe tournant (18) et le clapet (20) vers la position de fermeture de l'orifice (72).

8. Vanne à clapet (10) selon l'une des revendications précédentes, **caractérisée en ce que** le clapet (20) est un disque circulaire s'étendant dans un plan perpendiculaire à l'axe de rotation (16) et raccordé en périphérie à une oreille annulaire (56) de montage en rotation autour de l'axe.

9. Vanne à clapet (10) selon l'une des revendications précédentes, **caractérisée en ce que** les organes tournants (14, 18) sont tubulaires et traversés par une tige axiale (16), dont une extrémité porte une roue dentée (12) d'entraînement en rotation, solidaire en rotation du premier organe tournant (14) et dont une seconde extrémité opposée comporte un rebord annulaire (22) d'appui axial sur le clapet (20), des moyens annulaires (24) de rappel élastique étant enfilés sur la première extrémité de la tige (16) et serrés sur la roue dentée (12) par un écrou (100) vissé sur cette première extrémité de la tige (16).

10. Vanne à clapet (10) selon la revendication 9, **caractérisée en ce que** la roue dentée (12) est montée dans un boîtier fixe (88) comportant des moyens d'immobilisation axiale de la roue dentée (12).

11. Vanne à clapet (10) selon la revendication 10, **caractérisée en ce que** le boîtier (88) est fixé à la périphérie d'un carter (68) comportant un collecteur annulaire d'air de refroidissement (70), ce collecteur comprenant un orifice d'admission d'air (72) destiné à être ouvert et fermé par le clapet (20) du second organe tournant (18).

12. Dispositif de refroidissement des volets commandés d'une tuyère d'éjection d'un turboréacteur, **caractérisé en ce qu'**il comprend des moyens à commande manuelle de prélèvement d'air froid installés sur le carter du turboréacteur et comportant des vannes à clapet (10) selon l'une des revendications 1 à 11.

13. Dispositif de refroidissement selon la revendication 12, **caractérisé en ce que** les vannes à clapet (10) sont réparties de façon uniforme autour de l'axe du turboréacteur.

14. Dispositif de refroidissement selon la revendication 12 ou 13, **caractérisé en ce qu'**il comprend un vérin de commande (114) relié aux vannes à clapet (10) par un moyen d'entraînement synchrone (112), tel par exemple qu'un câble souple ou un câble à billes, raccordé en série aux vannes à clapet (10).

15. Turboréacteur, **caractérisé en ce qu'**il comprend un dispositif de refroidissement des volets commandés de tuyère d'éjection selon l'une des revendications 12 à 14.

## Claims

1. A gate valve (10) for a system controlling cooling in a turbomachine, comprising a gate (20) mounted so that it can pivot about an axis (16) between a position in which it shuts off an air passage orifice (72) and a position in which it opens the orifice, and means for rotating the gate (20) about the axis (16), the means for turning comprising two superposed coaxial rotary members (14,18) collaborating with one another via cam surfaces (40,46), the first of these members (14) being fixed in terms of translational movement along its axis of rotation and the second of these members (18) being capable of translational movement along this axis and bearing the gate 20), the cam surfaces (40, 46) being designed so that rotating the first rotary member (14) from the shut-off position causes a translational movement of the second rotary member (18) and of the gate (20) along the axis of rotation (16) followed by a rotation of this member (18) and of the gate (20) about this axis, the cam surfaces (40,46) of the two rotary members (14,18) being formed at the axial ends of these members and comprising ramps which are inclined in the form of a helix around the axis of rotation (16), **characterized in that** the ramps are connected at least at one of their ends to stop faces (42,44,48,50) that are radial with respect to the axis of rotation (16).

2. The gate valve as claimed in claim 1, **characterized in that** the two rotary members are of cylindrical shape and are centered and guided in rotation in a fixed cylindrical bushing.

3. The gate valve as claimed in claim 2, **characterized in that** one end of the bushing has a cutout to accommodate a radial finger secured to the second rotary member, this radial finger being engaged in the cutout in the closed position in order to prevent the second rotary member from turning.

4. The gate valve as claimed in claim 3, **characterized in that** the flanks of the cutout in the bushing collaborate with the radial finger to guide the second rotary member in its translational movement.

5. The gate valve as claimed in claim 3 or 4, **characterized in that** the lower end of the bushing collaborates with the radial finger to guide the second rotary member in its rotational movement.

6. The gate valve as claimed in one of claims 3 to 5, **characterized in that**, in the closed position, the radial finger of the second rotary member is engaged in the cutout in the bushing with axial play.

7. The gate valve as claimed in one of claims 3 to 6, **characterized in that** it comprises elastic return means axially urging the second rotary member and the gate toward the position in which the orifice is closed off.

8. The gate valve as claimed in one of the preceding claims, **characterized in that** the gate is a circular disk extending in a plane perpendicular to the axis of rotation and connected at the periphery to an annular lug via which it is mounted such that it can rotate about the axis.

9. The gate valve as claimed in one or the preceding claims, **characterized in that** the rotary members are tubular and have passing through them an axial rod, one end of which bears a gearwheel for turning it that rotates as one with the first rotary member, and an opposite second end of which comprises an annular flange for bearing axially against the gate, annular elastic return means being slipped over the first end of the roc and clamped against the gearwheel by a nut screwed onto this first end of the rod.

10. The gate valve as claimed in claim 9, **characterized in that** the gearwheel is mounted in a fixed housing comprising means for axially immobilizing the gearwheel.

11. The gate valve as claimed in claim 10, **characterized in that** the housing is fixed to the periphery of a casing comprising an annular cooling air manifold, this manifold comprising an air inlet orifice intended to be opened and closed by the gate belonging to the second rotary member.

12. A device for cooling the controlled flaps of a turbojet jet pipe nozzle, **characterized in that** it comprises manually controlled cold air bleeding means installed on the turbojet casing and comprising gate valves as claimed in one of claims 1 to 11.

13. The cooling device as claimed in claim 12, **characterized in that** the gate valves are distributed uniformly about the axis of the turbojet.

14. The cooling device as claimed in claim 12 or 13, **characterized in that** it comprises a control actuator connected to the gate valves by a synchronous drive means such as, for example, a flexible cable or a ball cable, connected in series to the gate valves.

15. A turbojet engine, **characterized in that** it comprises a device for cooling the controlled jet pipe nozzle flaps as claimed in one of claims 12 to 14.

## Patentansprüche

1. Klappenventil (10) für ein Kühlsystem in einer Turbomaschine, umfassend eine Klappe (20), die um eine Achse (16) zwischen einer Stellung zum Verschließen einer Luftdurchgangsöffnung (72) und einer Stellung zum Öffnen der Öffnung (72) drehbar angebracht ist, sowie Mittel für den Drehantrieb der Klappe (20) um die Achse (16), dass die Drehantriebsmittel zwei koaxiale Drehorgane (14, 18) umfassend, die übereinander angeordnet sind und über Kurvenflächen (40, 46) zusammenwirken, wobei das erste dieser Organe (14) entlang seiner Rotationsachse verschiebefest ist und das zweite dieser Organe (18) entlang dieser Achse verschiebebeweglich ist und die Klappe (20) trägt, wobei die Kurvenflächen (40, 46) definiert sind, damit die Drehung des ersten Drehorgans (14), ausgehend von der Schließstellung, eine Verschiebung des zweiten Drehorgans (18) und der Klappe (20) entlang der Rotationsachse (16), anschließend eine Drehung dieses Organs (18) und der Klappe (20) um diese Achse bewirkt, wobei die Kurvenflächen (40, 46) der beiden Drehorgane (14, 18) an den axialen Enden dieser Organe ausgebildet sind und Rampen aufweisen, die wendelartig um die Rotationsachse (16) geneigt sind, **dadurch gekennzeichnet, dass** die Rampen an wenigstens einem ihrer Enden mit gegenüber der Rotationsachse (16) radialen Anschlagflächen (42, 44, 48, 50) verbunden sind.

2. Klappenventil (10) nach Anspruch 1, **dadurch gekennzeichnet, dass** die beiden Drehorgane (14, 18) eine zylindrische Form aufweisen und in einer festen zylindrischen Hülse (28) zentriert und drehgeführt sind.

3. Klappenventil (10) nach Anspruch 2, **dadurch gekennzeichnet, dass** ein Ende der Hülse (28) eine Nut (64) zur Aufnahme eines mit dem zweiten Drehorgan (18) fest verbundenen radialen Fingers (62) aufweist, wobei dieser radiale Finger (62) in der Schließstellung in die Nut (64) eingreift, um das zweite Drehorgan (18) gegen ein Drehen festzulegen.

4. Klappenventil (10) nach Anspruch 3, **dadurch gekennzeichnet, dass** die Flanken der Nut (64) der Hülse mit dem radialen Finger (62) zusammenwirken, um das zweite Drehorgan (18) bei seiner Verschiebebewegung zu führen.

5. Klappenventil (10) nach Anspruch 3 oder 4, **dadurch gekennzeichnet, dass** das untere Ende der Hülse (28) mit dem radialen Finger (62) zusammenwirkt, um das zweite Drehorgan (18) bei seiner Drehbewegung zu führen.

6. Klappenventil nach einem der Ansprüche 3 bis 5, **dadurch gekennzeichnet, dass** der radiale Finger (62) des zweiten Drehorgans (18) in der Schließstellung mit einem axialen Spiel in die Nut (64) der Hülse (28) eingreift.

7. Klappenventil nach einem der Ansprüche 3 bis 6, **dadurch gekennzeichnet, dass** es elastische Rückstellmittel (24) umfasst, die das zweite Drehorgan (18) und die Klappe (20) in die Stellung zum Verschließen der Öffnung (72) axial belasten.

8. Klappenventil (10) nach einem der vorstehenden Ansprüche, **dadurch gekennzeichnet, dass** die Klappe (20) eine kreisförmige Scheibe ist, die in einer zur Rotationsachse (16) senkrechten Ebene verläuft und am Umfang mit einem ringförmigen Ansatz (56) zum drehbaren Anbringen um die Achse verbunden ist.

9. Klappenventil (10) nach einem der vorstehenden Ansprüche, **dadurch gekennzeichnet, dass** die Drehorgane (14, 18) rohrförmig und von einer axialen Stange (16) durchgriffen sind, von welcher ein Ende ein mit dem ersten Drehorgan (14) drehfestes Zahnrad (12) für den Drehantrieb trägt und ein abgewandtes zweites Ende einen ringförmigen Rand (22) zur axialen Anlage an der Klappe (20) trägt, wobei ringförmige Mittel (24) zum elastischen Rückstellen auf das erste Ende der Stange (16) aufgeschoben und durch eine auf dieses erste Ende der Stange (16) geschraubte Mutter (100) an dem Zahnrad (12) festgesetzt sind.

10. Klappenventil (10) nach Anspruch 9, **dadurch gekennzeichnet, dass** das Zahnrad (12) in einem festen Gehäuse (88) angebracht ist, das Mittel zum axialen Festlegen des Zahnrades (12) umfasst.

11. Klappenventil (10) nach Anspruch 10, **dadurch gekennzeichnet, dass** das Gehäuse (88) am Umfang eines Kastens (68) befestigt ist, der einen ringförmigen Kühlluftsammelbehälter (70) umfasst, wobei dieser Sammelbehälter eine Luftzuführöffnung (72) aufweist, die dazu bestimmt ist, durch die Klappe (20) des zweiten Drehorgans (18) geöffnet und verschlossen zu werden.

12. Vorrichtung zum Kühlen der gesteuerten Klappen einer Schubdüse eines Turbostrahltriebwerks, **dadurch gekennzeichnet**, das sie manuell gesteuerte Mittel zur Kaltluftentnahme umfasst, die an dem Gehäuse des Turbostrahltriebwerks angebracht sind und Klappenventile (10) nach einem der Ansprüche 1 bis 11 umfassen.

13. Kühlvorrichtung nach Anspruch 12, **dadurch gekennzeichnet, dass** die Klappenventile (10) um die Achse des Turbostrahltriebwerks gleichmäßig verteilt sind.

14. Kühlvorrichtung nach Anspruch 12 oder 13, **dadurch gekennzeichnet, dass** sie einen Steuerzylinder (114) umfasst, der über ein Synchronantriebsmittel (112), wie zum Beispiel ein flexibles Kabel oder ein Kugelseil, das mit den Klappenventile (10) in Reihe verbunden ist, mit den Klappenventilen (10) verbunden ist.

15. Turbostrahltriebwerk, **dadurch gekennzeichnet, dass** es eine Vorrichtung zum Kühlen der gesteuerten Klappen einer Schubdüse nach einem der Ansprüche 12 bis 14 umfasst.
